# EUROPÄISCHE PATENTSCHRIFT

(11) **EP 3 502 821 B1**
(45) Veröffentlichungstag und Bekanntmachung des Hinweises auf die Patenterteilung: **24.03.2021**
(21) Anmeldenummer: 18209725.3
(22) Anmeldetag: 03.12.2018
(51) Int. Cl.: G05D 1/02, E01C 19/48, E02F 9/20, E01C 19/00

(54) **SELBSTFAHRENDE BAUMASCHINE UND VERFAHREN ZUM STEUERN EINER SELBSTFAHRENDEN BAUMASCHINE**
SELF-PROPELLED CONSTRUCTION MACHINE AND METHOD FOR CONTROLLING THE SAME
ENGIN DE CONSTRUCTION ET PROCÉDÉ DE COMMANDE D'UN ENGIN DE CONSTRUCTION

(30) Priorität: 22.12.2017 DE 102017012010
(43) Veröffentlichungstag der Anmeldung: 26.06.2019
(73) Patentinhaber: Wirtgen GmbH, 53578 Windhagen (DE)
(72) Erfinder: FRITZ, Matthias, 53773 Hennef (DE); Wagner, Dr., Stefan, 53604 Bad Honnef (DE); BARIMANI, Cyrus, 53639 Königswinter (DE)
(74) Vertreter: Oppermann, Frank

(56) Entgegenhaltungen:
- EP-A1- 2 040 030
- EP-A1- 2 570 769
- EP-A1- 3 236 203
- EP-A1- 3 406 794
- EP-A2- 1 079 029
- CN-B- 103 941 679
- DE-A1-102009 059 106

## Beschreibung

Die Erfindung betrifft eine selbstfahrende Baumaschine und ein Verfahren zum Steuern einer selbstfahrenden Baumaschine. Darüber hinaus betrifft die Erfindung ein Baumaschinen-System mit einer selbstfahrenden Baumaschine und einer Totalstation.

Die selbstfahrenden Baumaschinen zeichnen sich dadurch aus, dass sie über eine an einem Maschinenrahmen angeordnete Arbeitseinrichtung zur Errichtung von Baukörpern auf einem Gelände oder zum Verändern des Geländes verfügen. Zu den bekannten selbstfahrenden Baumaschinen gehören beispielsweise Straßenfräsmaschinen, Recycler, Gleitschalungsfertiger oder Straßenfertiger.

Bei den Straßenfräsmaschinen oder Recyclern umfasst die Arbeitseinrichtung eine mit Fräs- oder Schneidwerkzeugen bestückte Fräs-/Schneidwalze, mit der vom Gelände Material in einer vorgegebenen Arbeitsbreite abgetragen werden kann.

Bei der Arbeitseinrichtung von Gleitschalungsfertigern handelt es sich um eine Vorrichtung zum Formen von fließfähigem Material, insbesondere Beton, die nachfolgend als Betonmulde bezeichnet wird. Mit der Betonmulde können Baukörper unterschiedlicher Ausbildung, beispielsweise Leitwände oder Verkehrsinseln hergestellt werden.

Die bekannten Straßenfertiger verfügen über eine Einbaubohle zum Einbau des Materials für den Straßenbelag.

Die selbstfahrenden Baumaschinen verfügen weiterhin über eine Antriebseinrichtung zum Ausführen von translatorischen und/oder rotatorischen Bewegungen der Baumaschine in dem Gelände sowie eine Steuereinrichtung zur Ansteuerung der Antriebseinrichtung.

Zur Errichtung von Baukörpern auf dem Gelände oder zum Verändern des Geländes wird bei selbstfahrenden Baumaschinen eine weitgehend automatische Steuerung der Baumaschine ohne nennenswerte Eingriffe des Fahrzeugführers angestrebt. Bei der automatischen Steuerung der Baumaschine wird die Antriebseinrichtung der Baumaschine derart gesteuert, dass sich ein Referenzpunkt auf der Baumaschine entlang einer vorgegebenen Soll-Wegstrecke, d. h. auf der Wegstrecke oder in einem vorgegebenen Abstand zur Wegstrecke bewegt, um einen Baukörper zu errichten oder das Gelände zu verändern. Dabei kann die Soll-Wegstrecke durch einzelne Segmente beschrieben werden, die Geraden oder Kurven sein können.

Ein bekanntes Verfahren zum Steuern von selbstfahrenden Baumaschinen setzt den Einsatz eines Leitdrahtes voraus, mit dem die Soll-Wegstrecke oder eine Äquidistante zu der Soll-Wegstrecke vorgegeben wird.

Selbstfahrende Baumaschinen können auch unter dem Einsatz einer Totalstation zur Positionsbestimmung oder eines Globalen Navigationssatellitensystems (GNSS) gesteuert werden. Für die automatische Steuerung der Baumaschine werden die Soll-Wegstrecke in dem Gelände beschreibende Daten ermittelt. Diese Daten können Koordinaten in einem von der Baumaschine unabhängigen zwei- oder dreidimensionalen Koordinatensystem sein. Die Ermittlung der Daten kann mit einem Computer in einem Büro abseits der Baustelle erfolgen. Während des Betriebs der Baumaschine erfolgt der permanente Abgleich zwischen der tatsächlichen Position der Baumaschine bzw. deren Arbeitseinrichtung, die mit dem GNS-System ermittelt wird, und der gewünschten Position, so dass sich die Baumaschine bzw. deren Arbeitseinrichtung entlang der Soll-Wegstrecke bewegt.

Bei einer Straßenfräsmaschine beispielsweise soll sich die Fräswalze entlang einer Soll-Wegstrecke bewegen, um mit einer vorgegebenen Arbeitsbreite und Frästiefe Material von der Geländeoberfläche abzutragen. Dabei ist nicht nur die Bewegung der Fräswalze in der Ebene, sondern auch die Einstellung der Höhe der Fräswalze in Bezug auf die Geländeoberfläche zu berücksichtigen.

Die Steuerung der Baumaschine mit einem GNS-System hat sich bewährt. Allerdings setzt diese Steuerung der Baumaschine den Empfang der Satellitensignale des GNS-Systems voraus. In der Praxis kann der Empfang der Satellitensignale gestört sein. Beispielsweise kann bei der Fahrt der Baumaschine unter einer Brücke hindurch oder in einen Tunnel hinein der Empfang des GNSS-Signals gestört sein, was zur Folge hat, dass mit dem GNSS die Position der Baumaschine in dem von der Baumaschine unabhängigen Satelliten-Koordinatensystem nicht mehr bestimmt werden kann. Dann ist die Steuerung der Baumaschine mit dem GNSS nicht mehr möglich.

Die EP 2 040 030 A1 befasst sich mit dem Problem der Einmessung einer Totalstation mittels eines globalen Satellitennavigationssystems (GNSS). In der EP 2 040 030 A1 wird auf die bekannten Transformationen zwischen einem inneren und äußeren Bezugssystem hingewiesen. Als ein konkreter Anwendungsfall für das Ausbleiben der GNNS-Signale wird die Fahrt unter eine Brücke beschrieben. Die EP 2 040 030 A1 schlägt beim Ausfall des GNSS die Positionsbestimmung mittels einer Totalstation vor.

Aus der EP 3 236 203 A1 ist ein Verfahren zur Steuerung einer Baumaschine mittels einer Totalstation bekannt, bei dem die Baumaschine mittels der Totalstation zur Ermittlung eines Ist-Positions-Verlaufs optisch angepeilt wird, ein Soll-Positions-Verlauf ermittelt und ausgehend von dem Ist- und dem Soll-Positions-Verlauf Steuersignale erzeugt werden, die an die Baumaschine gesendet werden, um diese und/oder deren Werkzeug zu steuern.

Die EP 2 570 769 A1 beschreibt ein geodätisches Vermessungssystem zur Erkennung und Verfolgung eines beweglichen Zielobjekts mit einem anzuvisierenden Zielpunkt.

Der Erfindung liegt die Aufgabe zugrunde, eine selbstfahrende Baumaschine zu schaffen, die sich entlang einer Soll-Wegstrecke mit großer Genauigkeit auch dann bewegen lässt, wenn der Empfang der Satellitensignale des GNS-Systems gestört sein sollte. Eine weitere Aufgabe der Erfindung ist, ein Verfahren anzugeben, mit dem sich eine selbstfahrende Baumaschine entlang einer Soll-Wegstrecke mit großer Genauigkeit auch dann bewegen lässt, wenn der Empfang der Satellitensignale des GNS-Systems gestört sein sollte. Der Erfindung liegt insbesondere die Aufgabe zugrunde, die Steuerung einer Baumaschine auch bei einer Störung des Empfangs der Satellitensignale des GNS-Systems sicherzustellen, so dass die Baumaschine nicht angehalten werden muss.

Die Lösung dieser Aufgaben erfolgt erfindungsgemäß mit den Merkmalen der unabhängigen Patentansprüche. Die Gegenstände der abhängigen Ansprüche betreffen bevorzugte Ausführungsformen der Erfindung.

Die erfindungsgemäße selbstfahrende Baumaschine verfügt über einen Maschinenrahmen und eine Antriebseinrichtung zum Antreiben der Baumaschine sowie eine am Maschinenrahmen angeordnete Arbeitseinrichtung zum Verändern des Geländes, beispielsweise eine Fräs- oder Schneidwalze, oder eine Arbeitseinrichtung zur Errichtung von Baukörpern auf einem Gelände, beispielsweise eine Betonmulde.

Unter einer Antriebseinrichtung werden nachfolgenden sämtliche Bauteile oder Baugruppen (Aggregate) der Baumaschine verstanden, die dem Fortbewegen der Baumaschine im Gelände dienen. Zu diesen Bauteilen oder Aggregaten zählen nicht nur die Laufwerke, beispielsweise Kettenlaufwerke oder Räder, auf denen die Baumaschine aufsteht, und die Einrichtungen zum Antreiben der Laufwerke, beispielsweise hydraulische Motoren oder ein Verbrennungsmotor, sondern auch Einrichtungen zur Höhenverstellung des Maschinenrahmens bzw. der Arbeitseinrichtung in Bezug auf die Geländeoberfläche, beispielsweise Hubsäulen, an denen die Laufwerke befestigt sind. Diese Bauteile oder Aggregate der Antriebseinrichtung der Baumaschine erlauben eine Bewegung eines Referenzpunktes auf der Baumaschine entlang einer Wegstrecke, d. h. auf der Wegstrecke oder in einem vorgegeben Abstand zu der Wegstrecke (Äquidistante). Diese Wegstrecke kann eine Trajektorie im Raum oder einer Ebene sein. Wenn die Trajektorie eine dreidimensionale Bahnkurve ist, können auch Höhenänderungen Berücksichtigung finden, beispielsweise die Einstellung der Höhe der Arbeitseinrichtung in Bezug auf die Geländeoberfläche.

Darüber hinaus verfügt die erfindungsgemäße Baumaschine über eine Positionsbestimmungs-Einrichtung zur Bestimmung der Position eines Referenzpunktes auf der Baumaschine in einem von der Baumaschine unabhängigen Koordinatensystem. Die Positionsbestimmungs-Einrichtung weist einen Navigationssatellitensystem-Empfänger zum Empfangen von Satellitensignalen eines globalen Navigationssatellitensystems (GNSS) und eine Recheneinheit auf, die derart konfiguriert ist, dass auf der Grundlage der Satellitensignale die Position eines Referenzpunktes (R) auf der Baumaschine beschreibende Navigationssatellitensystem-Positionsdaten in einem von der Baumaschine unabhängigen Koordinatensystem (X, Y, Z) bestimmt werden.

Zur Ansteuerung der Antriebseinrichtung der Baumaschine ist eine Steuereinrichtung vorgesehen, die derart konfiguriert ist, dass sich ein Referenzpunkt (R) auf der Baumaschine entlang einer vorgegebenen Soll-Wegstrecke bewegt. Die Steuereinrichtung steuert die einzelnen Bauteile oder Aggregate der Antriebseinrichtung derart an, dass sich die Baumaschine entlang der vorgegebenen Wegstrecke bewegt, die beispielsweise durch kartesische Koordinaten in einem kartesischen Koordinatensystem oder Polarkoordinaten in einem Polarkoordinatensystem oder Richtungsangaben und eine Kilometrierung beschrieben werden kann. Die Steuereinrichtung kann Bestandteil einer zentralen Steuereinrichtung der Baumaschine sein, auf der ein Steuerungsprogramm läuft, um die einzelnen Bauteile oder Baugruppen der Baumaschine anzusteuern. Beispielsweise kann die Steuereinrichtung eine speicherprogrammierbare Steuerung (SPS) enthalten, die einen Mikrocontroller umfassen kann.

Die Steuerung der Baumaschine erfolgt im Normalbetrieb unter Verwendung eines globalen Navigationssatellitensystems (GNSS), so dass sich der Referenzpunkt (R) auf der Baumaschine entlang einer vorgegebenen Soll-Wegstrecke mit hoher Genauigkeit bewegt. Die Steuerung der Baumaschine mit dem GNSS kann sowohl eine Steuerung in der Ebene als auch eine Höhensteuerung umfassen. Die Höhensteuerung kann aber auch unter Verwendung eines terrestrischen Systems (Totalstation) erfolgen. Die Steuerung der Baumaschine mit dem GNSS kann auch die Auswertung von Korrektursignalen einschließen, die von einer Basisstation empfangen werden. Derartige Steuerungen gehören zum Stand der Technik.

Die erfindungsgemäße Baumaschine sieht einen Steuerungsmodus vor, in dem die Steuerung der Baumaschine nicht auf der Grundlage der Satellitensignale des globalen Navigationssatellitensystems erfolgt. Dieser Steuerungsmodus wird nachfolgend als Totalstation-Steuerungsmodus bezeichnet.

Solange der Navigationssatellitensystem-Empfänger die Satellitensignale mit ausreichender Qualität empfängt, kann die Steuerung der Baumaschine allein unter Verwendung des GNSS erfolgen. Ansonsten kann die Steuerung der Baumaschine auch ohne das GNSS erfolgen, wobei diese Steuerung solange erfolgen kann bis die Satellitensignale wieder mit ausreichender Qualität empfangen werden. Die Steuerung der Baumaschine in dem Totalstation-Steuerungsmodus kann aber auch unabhängig von der Qualität der Satellitensignale erfolgen. In diesen Steuerungsmodus kann jederzeit umgeschaltet werden oder umgekehrt.

Die Positionsbestimmungs-Einrichtung der erfindungsgemäßen Baumaschine zeichnet sich durch einen Reflektor zur optischen Messung mittels einer Totalstation, welcher einen von der Totalstation ausgesandten Lichtstrahl reflektiert, und einen Totalstationsdaten-Empfänger zum Empfangen von Totalstationsdaten aus, die von einem Sender der Totalstation ausgesandt werden. Die Totalstation wird an einem Standpunkt im Umkreis der Baumaschine aufgestellt, so dass der Totalstationsdaten-Empfänger beim Vorschub der Baumaschine die Totalstationsdaten empfangen kann. Die Totalstationsdaten können die Position des Reflektors in einem auf die Totalstation bezogenen Koordinatensystem oder in einem von der Totalstation unabhängigen Koordinatensysten beschreibende Daten sein. Die Position des Reflektors kann mit der Totalstation durch Messung der Richtung und Entfernung bestimmt werden, wobei die Richtungsmessung die Messung des Horizontalwinkels und Vertikalwinkels umfassen kann. Folglich können die Totalstationsdaten Richtung und Entfernung des Reflektors beschreibende Daten sein. Die Totalstationsdaten können aber auch nur Richtung oder nur Position beschreibende Daten sein. Sämtliche Daten können von dem Totalstationsdaten-Empfänger empfangen und ausgewertet werden.

Darüber hinaus verfügt die Positionsbestimmungs-Einrichtung über eine Speichereinheit. Folglich können Navigationssatellitensystem-Positionsdaten, die beim Vorschub der Baumaschine an bestimmten Positionen der Baumaschine bzw. zu bestimmten Zeitpunkten ermittelt werden, wenn die Satellitensignale des globalen Navigationssatellitensystems empfangen werden, und Totalstationsdaten für eine weitere Auswertung gespeichert werden.

Die Recheneinheit der Positionsbestimmungs-Einrichtung ist derart konfiguriert, dass zur Vorbereitung eines Totalstation-Steuerungsmodus, in dem die Steuerung der Baumaschine nicht auf der Grundlage der Satellitensignale des globalen Navigationssatellitensystems erfolgen soll, die Position des Standpunktes und die Orientierung der Totalstation in dem von der Baumaschine unabhängigen Koordinatensystem aus den an unterschiedlichen Positionen der Baumaschine bestimmten Navigationssatellitensystem-Positionsdaten und aus Richtung und/oder Entfernung des Reflektors an den unterschiedlichen Positionen der Baumaschine beschreibenden Totalstationsdaten, die mit dem Totalstationsdaten-Empfänger empfangen werden, berechnet werden. Die Berechnung der Position des Standpunktes und der Orientierung der Totalstation in dem von der Baumaschine unabhängigen Koordinatensystem erfolgt also dann, wenn Satellitensignale noch in ausreichender Qualität empfangen werden und die Positionsbestimmung der Baumaschine mittels des GNSS erfolgen kann. Da Standpunkt und Orientierung der Totalstation jetzt bekannt sind, ist die Totalstation in dem von der Baumaschine unabhängigen Koordinatensystem definiert, was umgangssprachlich als "eingemessen" bezeichnet wird. Das "Einmessen" der Totalstatin bedeutet hier, dass das auf die Totalstation bezogenene Koordinatensystem, das im Allgemeinen ein polares Koordinatensystem ist, in Übereinstimmungmit dem von der Baumaschine unabhängigen Koordinatensystem, das im Allgemeinen ein kartesisches Koordinatensystem ist, gebracht wird. Mathematisch ausgedrückt werden die Tranformationsparameter zwischen den beiden Koordinatensystemen bestimmt. Dies setzt voraus, dass beim weiteren Vorschub der Baumaschine Standpunkt und Orientierung der Totalstation in dem von der Baumaschine unabhängigen Koordinatensystem unverändert bleiben.

Für den Fall, dass der Satellitensignal-Empfänger die Satellitensignale nicht mehr mit ausreichender Qualität empfängt, kann die Steuerung der Baumaschine in dem Totalstation-Steuerungsmodus erfolgen. In dem Totalstation-Steuerungsmodus können die Positionen des Referenzpunktes auf der Baumaschine in dem von der Baumaschine unabhängigen Koordinatensystem aus der Position des Standpunktes und der Orientierung der Totalstation und der mit der Totalstation gemessenen Position (Richtung und Entfernung) des Reflektors relativ zu der Totalstation bestimmt werden. Die Bestimmung der Positionen des Referenzpunktes auf der Baumaschine kann in einer Recheneinheit der Totalstation oder der Recheneinheit der Positionsbestimmungs-Einrichtung der Baumaschine oder in beiden Recheneinheiten erfolgen, was einen uni- oder bidirektionalen Datenaustausch zwischen den Recheneinheiten der Baumaschine und der Totalstation voraussetzt.

Die bekannten vollautomatisch arbeitenden Totalstationen können in dem von der Baumaschine unabhängigen Koordinatensystem definiert werden, wenn die Position des Standpunktes und die Orientierung der Totalstation in diesem Koordinatensystem bekannt ist. Die Position des Standpunktes und die Orientierung der Totalstation kann in der Recheneinheit der Positionsbestimmungs-Einrichtung auf der Baumaschine berechnet werden. Wenn Position und die Orientierung der Totalstation auf der Baumaschine berechnet worden sind, können die entsprechenden Daten an die Totalstation übermittelt werden. Die Datenübertragung kann mit einem an der Baumaschine vorgesehenen Sender und einem an der Totalstation vorgesehenen Empfänger erfolgen. Wenn die Totalstation "eingemessen" ist, kann die Totalstation die Positionen des Referenzpunktes auf der Baumaschine in dem von der Baumaschine unabhängigen Koordinatensystem an die Baumaschine übermitteln. Die Berechnung der Position des Referenzpunktes auf der Baumaschine kann dann auf der Grundlage der mit der Totalstation in dem Totalstation-Steuerungsmodus gemessenen Richtung und Entfernung (Position) des Reflektors in dem von der Baumaschine unabhängigen Koordinatensystem, das nicht dem Koordinatensystem der Totalstation entspricht, erfolgen.

Die Position des Reflektors auf der Baumschine definiert einen Referenzpunkt auf der Baumaschine. Die Steuerung der Baumaschine kann in Bezug auf einen beliebigen anderen Referenzpunkt erfolgen, dessen Koordinaten aus den Koordinaten des Reflektors aufgrund der bekannten Geometrie der Baumaschine berechnet werden können.

In dem Totalstation-Steuerungsmodus steuert die Steuereinrichtung die Antriebeinrichtung auf der Grundlage der in dem Totalstation-Steuerungsmodus bestimmten Positionen des Referenzpunktes auf der Baumaschine derart an, dass sich der Referenzpunkt auf der Baumaschine entlang einer vorgegebenen Soll-Wegstrecke bewegt.

Die Berechnung der Position des Standpunktes der Totalstation und der Orientierung der Totalstation aus den Messwerten der Totalstation an verschiedenen Anschlusspunkten, kann mit den in der Geodäsie bekannten Methoden erfolgen. Die Koordinaten der Anschlusspunkte sind durch das globale Navigationssattelitensystem bekannt. Grundsätzlich ist eine Messung mit der Totalstation an nur zwei unterschiedlichen Anschlusspunkten für die Bestimmung des Standpunktes ausreichend, um mit den bekannten Koordinaten der Anschlusspunkte die Koordinaten des Standpunktes bestimmen zu können. Zur Erhöhung der Genauigkeit können aber auch Messungen an mehr als zwei Punkten vorgenommen werden. Wenn Messwerte zu mehr als zwei Anschlusspunkten vorliegen, kann auch eine überbestimmte Transformation, zum Beispiel eine Helmert-Transformation, zur Berechnung des Standpunktes der Totalstation verwendet werden. Wenn eine Mehrzahl von unterschiedlichen Messungen durchgeführt werden, können zur Positionsbestimmung auch der Mittelwert der Messergebnisse gebildet oder andere in der Geodäsie bekannte Methoden zur Auswertung der Messergebnisse herangezogen werden.

Die Positionsbestimmungs-Einrichtung sieht eine fortlaufende (rollierende) Berechnung der Position des Standpunktes und der Orientierung der Totalstation während der Bewegung der Baumaschine vor, um mit unterschiedlichen Messungen den Standpunkt und die Orientierung der Totalstation laufend neu berechnen zu können. Dadurch kann die Genauigkeit erhöht werden, wenn sich die Platzierung der Totalstation in Bezug auf die Baumaschine verbessert, beispielsweise sich der Abstand der Baumaschine zu der Totalstation verringert. Bei dieser Ausführungsform ist die Recheneinheit der Positionsbestimmungs-Einrichtung derart konfiguriert, dass die Totalstationsdaten für die Bestimmung der Position des Standpunktes und der Orientierung der Totalstation in dem von der Baumaschine unabhängigen Koordinatensystem während der Bewegung der Baumaschine in aufeinanderfolgenden Messungen zu unterschiedlichen Zeitpunkten in die Speichereinheit eingelesen werden, wobei die Position und Orientierung des Standpunktes der Totalstation fortlaufend berechnet wird.

Eine besondere Ausführungsform der Positionsbestimmungs-Einrichtung sieht vor, dass zwei Messungen an unterschiedlichen Positionen der Baumaschine im Gelände vorgenommen werden, um Standpunkt und Orientierung der Totalstation zu bestimmen. Die Recheneinheit ist bei dieser Ausführungsform derart konfiguriert, dass die Position des Standpunktes und die Orientierung der Totalstation auf der Grundlage der Navigationssatellitensystem-Positionsdaten, die die Position des Referenzpunktes auf der Baumaschine an einer ersten Position, die die Baumaschine in dem von der Baumaschine unabhängigen Koordinatensystem einnimmt, beschreiben, und auf der Grundlage der Navigationssatellitensystem-Positionsdaten, die die Position des Referenzpunktes auf der Baumaschine an einer zweiten Position, die die Baumaschine in dem von der Baumaschine unabhängigen Satellitennavigations-Koordinatensystem einnimmt, beschreiben, und der Richtung und Entfernung des Reflektors an der ersten und zweiten Position beschreibenden Totalstationsdaten berechnet werden.

Die Position des Standpunktes und die Orientierung der Totalstation kann in einem Polarkoordinatensystem oder einem kartesischen Koordinatensystem beschrieben oder zwischen diesen Koordinatensystemen transformiert werden. Die Berechnung des Standpunktes und der Orientierung der Totalstation auf der Grundlage der beiden Messungen kann mit dem in der Geodäsie unter dem Begriff der freien Stationierung bekannten Methoden erfolgen.

Die Recheneinheit der Positionsbestimmungs-Einrichtung ist bei der Ausführungsform auf der Grundlage von Messungen an zwei unterschiedlichen Orten derart konfiguriert, dass die Position des Standpunktes und die Orientierung der Totalstation auf der Grundlage der mit der Totalstation gemessenen Richtung zu dem Reflektor auf der Baumaschine und der Entfernung zwischen dem Standpunkt der Totalstation und dem Reflektor in der ersten Position, die die Baumaschine in dem von der Baumaschine unabhängigen Satellitennavigations-Koordinatensystem einnimmt, und der mit der Totalstation gemessenen Richtung zu dem Reflektor auf der Baumaschine und der Entfernung zwischen dem Standpunkt der Totalstation und dem Reflektor in einer zweiten Position, die die Baumaschine in dem von der Baumaschine unabhängigen Satellitennavigations-Koordinatensystem einnimmt, und den Navigationssatellitensystem-Positionsdaten an der ersten und zweiten Position berechnet wird.

Die erste und zweite Position sollten in einem für die Genauigkeit der Messung ausreichenden Abstand zueinander liegen. Die Richtungsmessungen können die Messung der Horizontalrichtung und des Vertikalwinkels einschließen.

Eine Distanzmessung ist bei einer weiteren Ausführungsform nicht erforderlich, die Messungen an mindestens drei unterschiedlichen Positionen der Baumaschine vorsieht. Bei dieser Ausführungsform reicht allein die Messung des Horizontalwinkels und gegebenenfalls des Vertikalwinkels für die Positionsbestimmung aus. Die Position und Orientierung der Totalstation kann mit dem in der Geodäsie als Rückwärtsschnitt bekannten Verfahren bestimmt werden.

Die Steuereinrichtung der erfindungsgemäßen Baumaschine kann unterschiedlich ausgebildet sein. Bei einer Ausführungsform ist die Steuereinrichtung derart konfiguriert, dass die Antriebseinrichtung derart angesteuert wird, dass der Abstand zwischen der von der Soll-Wegstrecke beschriebenen Soll-Position und der Ist-Position des Referenzpunktes auf der Baumaschine minimal ist. Der Steuerung kann auch eine von der Soll-Wegstrecke beschriebene Richtungsdifferenz zwischen einer Soll-Richtung und der Ist-Richtung der Baumaschine zugrunde liegen.

Die selbstfahrende Baumaschine kann eine Straßenfräse oder ein Recycler oder Stabilisierer oder Surface Miner sein, wobei die Arbeitseinrichtung eine mit Fräs- oder Schneidwerkzeugen bestückte Fräs-/Schneidwalze aufweist, oder ein Gleitschalungsfertiger sein, wobei die Arbeitseinrichtung eine Vorrichtung zum Formen von fließfähigem Material aufweist, oder ein Straßenfertiger sein, wobei die Arbeitseinrichtung eine Einbaubohle zum Formen von Material aufweist.

Es zeigen:
- Fig. 1: ein Ausführungsbeispiel einer Straßenfräsmaschine in der Seitenansicht,
- Fig. 2: ein Ausführungsbeispiel eines Gleitschalungsfertigers in der Seitenansicht,
- Fig. 3: eine schematische Darstellung der für die Erfindung wesentlichen Komponenten der Baumaschine und einer Totalstation und
- Fig. 4: die Baumaschine zusammen mit einem Satellitennavigationssystem und einer Totalstation in vereinfachter schematischer Darstellung.

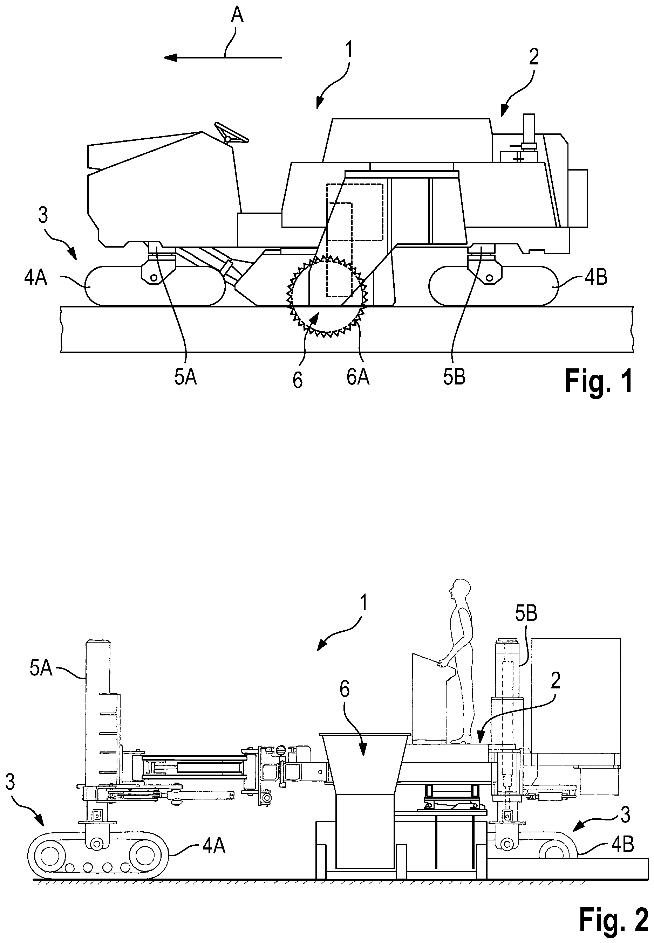

Die Fig. 1 zeigt als Beispiel für eine selbstfahrende Baumaschine 1 eine Straßenfräsmaschine in der Seitenansicht. Da Straßenfräsmaschinen als solche zum Stand der Technik gehören, werden hier nur die für die Erfindung wesentlichen Komponenten der Baumaschine beschrieben.

Die Straßenfräsmaschine weist einen Maschinenrahmen 2 auf, der von einem Fahrwerk 3 getragen wird. Das Fahrwerk 3 weist zwei vordere und zwei hintere, lenkbare Laufwerke 4A, 4B auf, die an vorderen und hinteren Hubsäulen 5A, 5B befestigt sind. Die Arbeitsrichtung (Fahrtrichtung) der Straßenfräsmaschine ist mit einem Pfeil A gekennzeichnet. Die Laufwerke 4A, 4B und die Hubsäulen 5A, 5B sind Teil einer Antriebseinrichtung der Straßenfräsmaschine zum Ausführen von translatorischen und/oder rotatorischen Bewegungen. Zu der Antriebseinrichtung gehören auch nicht dargestellte vorzugsweise hydraulischen Antriebe für die Laufwerke 4A, 4B sowie ein nicht dargestellter Verbrennungsmotor. Mit den Laufwerken 4A, 4B kann die Straßenfräsmaschine vor- und zurückbewegt werden. Durch Anheben und Absenken der Hubsäulen 5A, 5B kann der Maschinenrahmen 2 gegenüber dem Boden in der Höhe und Neigung bewegt werden. Damit hat die Straßenfräsmaschine drei translatorische und drei rotatorische Freiheitsgrade. Die Straßenfräsmaschine verfügt über eine Arbeitseinrichtung zum Verändern des Geländes. Hierbei handelt es sich um eine Fräseinrichtung 6 mit einer mit Fräswerkzeugen bestückten Fräswalze 6A.

Fig. 2 zeigt als weiteres Beispiel für eine selbstfahrende Baumaschine 1 einen Gleitschalungsfertiger in der Seitenansicht ohne Fördereinrichtung, der in der EP 1 103 659 B1 im Einzelnen beschrieben ist. Auch die Gleitschalungsfertiger 1 weist einen Maschinenrahmen 2 auf, der von einem Fahrwerk 3 getragen wird. Das Fahrwerk 3 weist wieder vordere und hintere Laufwerke 4A, 4B auf, die an vorderen und hinteren Hubsäulen 5A, 5B befestigt sind. Der Gleitschalungsfertiger verfügt über eine Vorrichtung 6 zum Formen von Beton, die nachfolgend als Betonmulde bezeichnet wird. Die Betonmulde 6 ist eine Arbeitseinrichtung zur Errichtung eines Baukörpers mit einer vorgegebenen Form auf dem Gelände, welche zusammen mit dem Maschinenrahmen 2 angehoben oder abgesenkt werden kann.

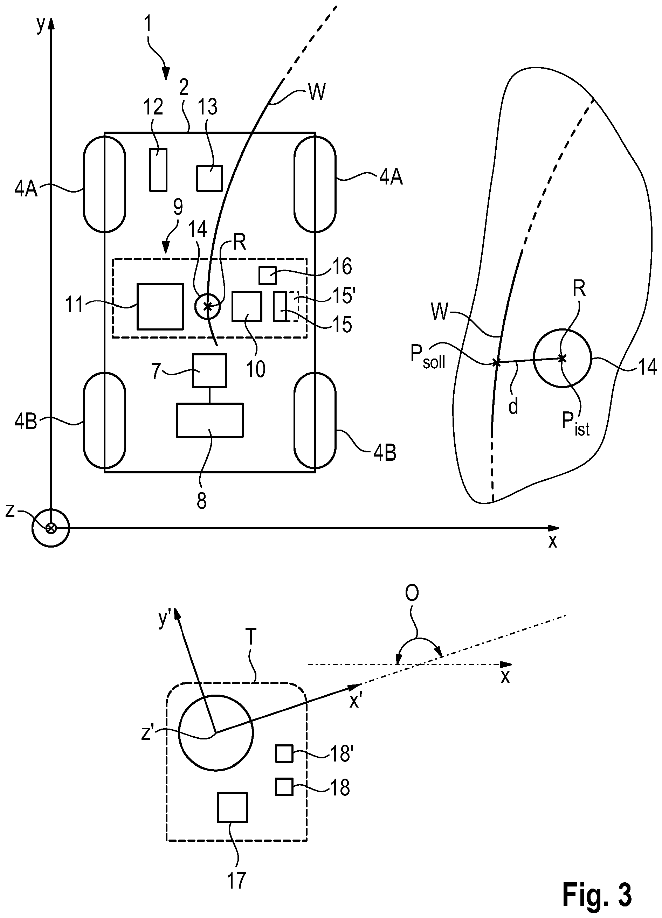

Fig. 3 zeigt die für die Erfindung wesentlichen Komponenten der Baumaschine in stark vereinfachter schematischer Darstellung. Die einander entsprechenden Teile sind mit den gleichen Bezugszeichen versehen.

Die Baumaschine 1 verfügt über eine automatische Steuerung unter der Verwendung eines Satellitennavigationssystems (GNSS). Eine derartige Steuerung gehört zum Stand der Technik. Die Steuereinrichtung 7 zur Ansteuerung der nur schematisch dargestellten Antriebseinrichtung 8 der Baumaschine 1 steuert die Antriebseinrichtung derart an, dass sich ein Referenzpunkt R auf der Baumaschine entlang einer bestimmten Wegstrecke W, d. h. auf der Wegstrecke oder in einem Abstand zu der Wegstrecke (Äquidistante) bewegt. Der Referenzpunkt R kann ein beliebiger Punkt auf der Baumaschine sein.

Die Steuereinrichtung 7 ist derart konfiguriert, dass die Antriebseinrichtung 8 derart angesteuert wird, dass der Abstand d zwischen der von einer Soll-Wegstrecke beschriebenen Soll-Position Pₛₒₗₗ und der Ist-Position Pᵢₛₜ eines Referenzpunktes R auf der Baumaschine 1 minimal ist. Hierzu werden von der Steuereinrichtung 7 die lenkbaren Laufwerke 4A, 4B und die Hubzylinder 5A, 5B der Baumaschine entsprechend angesteuert. In Fig. 3 ist in vergrößerter Darstellung auf der rechten Bildhälfte eine Abweichung d der Ist-Position Pᵢₛₜ von der Soll-Position Pₛₒₗₗ gezeigt. Der Referenzpunkt R der Baumaschine 1 auf der linken Bildhälfte liegt auf der Soll-Wegstrecke W.

Die Bestimmung der Soll-Position Pᵢₛₜ des Referenzpunktes R auf der Baumaschine 1 erfolgt unter Verwendung des GNS-Systems mit einer Positionsbestimmungs-Einrichtung 9, die mindestens einen auf der Baumaschine angeordneten Navigationssatellitensystem-Empfänger 10 zum Empfangen von Satellitensignalen des GNSS und eine Recheneinheit 11 zum Auswerten der Satellitensignale zur Bestimmung von die Position des Referenzpunktes auf der Baumaschine beschreibenden Navigationssatellitensystem-Positionsdaten aufweist. Der Navigationssatellitensystem-Empfänger 10 empfängt die auf ein globales Koordinatensystem bezogenen Satellitensignale, um den Referenzpunkt R auf der Baumaschine in diesem von der Baumaschine unabhängigen Koordinatensystem bestimmen zu können.

Zum Einlesen der Daten, mit denen die Soll-Wegstrecke W beschrieben wird, ist eine Schnittstelle 12 vorgesehen. Die Schnittstelle 12 kann beispielsweise eine USB-Schnittstelle, eine Schnittstelle nach dem Bluetooth-Standard, eine Infrarot-Schnittstelle, ein LAN oder WLAN sein. Eine Schnittstelle 12 kann aber auch mit einem Daten-Laufwerk geschaffen werden, um die Daten mit einem beliebigen Datenträger einlesen zu können. Zum Speichern der über die Schnittstelle eingelesenen Daten, mit denen die Soll-Wegstrecke W beschrieben wird, ist ein Speicher 13 vorgesehen. Der Speicher 13 kann beispielsweise der Arbeitsspeicher eines Computers, ein RAM (Random Access Memory) oder ein Flash-Speicher oder eine sonstige bekannte Form eines Speichers sein.

Darüber hinaus weist die Positionsbestimmungs-Einrichtung 9 mindestens einen Reflektor (Prisma) 14 zum Reflektieren eines von einer Totalstation T ausgesandten Lichtstrahls und einen Totalstationsdaten-Empfänger 15 zum Empfangen von Totalstationsdaten auf. Der Reflektor 14 kann an dem Maschinenrahmen 2 an einem beliebigen Referenzpunkt angeordnet sein, der von dem Referenzpunkt R der Baumaschine verschieden sein kann. In dem vorliegenden Ausführungsbeispiel wird zur Vereinfachung angenommen, dass der Referenzpunkt des Reflektors dem Referenzpunkt R entspricht. Die Messwertbestimmung erfolgt mit der Totalstation T vollautomatisch, wobei Totalstationsdaten, die Richtung und/oder Entfernung des Reflektors relativ zu der Totalstation beinhalten können, von der Totalstation ausgesandt werden und von dem Totalstationsdaten-Empfänger 15 der Positionsbestimmungs-Einrichtung 9 empfangen werden. Die Richtungsmesssung kann die Messung des Horizontalwinkels und Vertikalwinkels umfassen.

Die Navigationssatellitensystem-Positionsdaten, die die Position des Referenzpunktes R in dem Koordinatensystem X, Y, Z beschreiben, und die Totalstationsdaten werden in einem Speicher 16 der Positionsbestimmungs-Einrichtung 9 gespeichert. Die Schnittstelle 12 und die Positionsbestimmungs-Einrichtung 9 können auch über einen gemeinsamen Speicher verfügen.

Die Recheneinheit 11 der Positionsbestimmungs-Einrichtung 9 kann Bestandteil einer nicht dargestellten zentralen Recheneinheit oder Steuereinrichtung der Baumaschine sein. Die Recheneinheit 11 kann beispielsweise allgemeine Prozessoren, digitale Signalprozessoren (DSP) zur kontinuierlichen Bearbeitung digitaler Signale, Mikroprozessoren, anwendungsspezifische integrierte Schaltungen (ASIC), aus Logikelementen bestehende integrierte Schaltkreise (FPGA) oder andere integrierte Schaltkreise (IC) oder Hardware-Komponenten aufweisen, um die nachfolgend beschriebenen Rechenoperationen zur Positionsbestimmung auszuführen. Auf den Hardware-Komponenten kann zur Durchführung der Verfahrensschritte ein Datenverarbeitungsprogramm (Software) laufen, um die einzelnen Verfahrensschritte auszuführen.

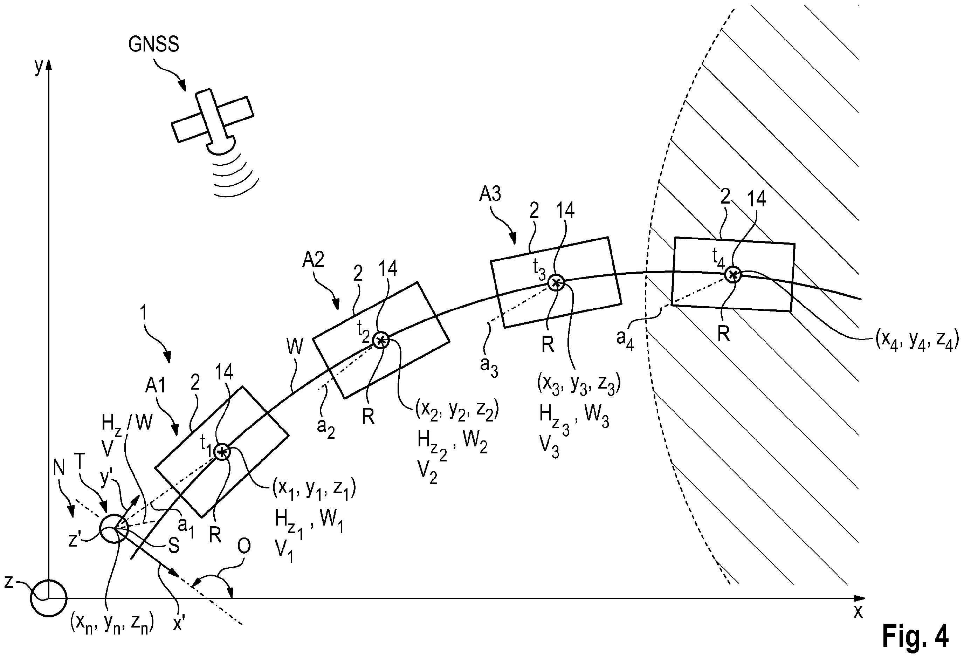

Fig. 4 zeigt die Bewegung der Baumaschine 1 in einem von der Baumaschine unabhängigen Koordinatensystem zusammen mit dem GNSS und der Totalstation T. Die Baumaschine bewegt sich entlang einer Soll-Wegstrecke W, die auch als Trajektorie bezeichnet wird. Die Trajektorie kann eine dreidimensionale Raumkurve oder eine Bahnkurve in der Ebene sein. Die Raumkurve oder Bahnkurve werden abseits der Baustelle in einem Büro ermittelt und über die Schnittstelle 12 in die Steuereinrichtung 7 eingelesen. In dem vorliegenden Ausführungsbeispiel wird angenommen, dass die in der Zeichenebene dargestellte Soll-Wegstrecke W (Trajektorie) eine durch eine Folge von Soll-Positionen (x, y, z) in dem Koordinatensystem (X, Y, Z) beschriebene Bahnkurve ist.

Während der Bewegung der Baumaschine 1 ermittelt die Positionsbestimmungs-Einrichtung 9 fortlaufend die Ist-Position (x, y, z) eines geeigneten Referenzpunktes auf der Baumaschine. Bei dem vorliegenden Ausführungsbeispiel wird zur Vereinfachung nur ein einziger Referenzpunkt R auf der Baumaschine festgelegt. Die Ist-Position Pᵢₛₜ der Baumaschine wird fortlaufend mit der Soll-Position Pₛₒₗₗ verglichen. Die Steuereinrichtung 7 steuert die Antriebeinrichtung 8 derart an, dass die Abweichung d zwischen der Ist-Position und der Soll-Position minimal ist. Diese Steuerung setzt den Empfang des GNSS-Signals des GNSS voraus (Fig. 1).

Der Reflektor 14 der Positionsbestimmungs-Einrichtung 9 befindet sich auf der Baumaschine 1 ebenfalls an einem geeigneten Referenzpunkt. Bei dem vorliegenden Ausführungsbeispiel wird zur Vereinfachung ein gemeinsamer Referenzpunkt R auf der Baumaschine 1 für den Navigationssatellitensystem-Empfänger 10 und den Reflektor 14 für die Totalstation T festgelegt. Es können aber auch verschiedene Referenzpunkte festgelegt werden. Wenn verschiedene Referenzpunkte festgelegt werden, können die Koordinaten des einen Referenzpunkts aus den Koordinaten des anderen Referenzpunkts bestimmt werden, da die Lage der Referenzpunkte auf dem Maschinenrahmen 2 bekannt ist.

Die nachfolgend als GNSS-Daten bezeichneten Navigationssatellitensystem-Positionsdaten werden zu einem ersten Zeitpunkt t₁, an dem sich die Baumaschine mit dem Referenzpunkt R an einer ersten Position (x₁, y₁, z₁) befindet, und zu einem zweiten Zeitpunkt t₂, an dem sich die Baumaschine mit dem Referenzpunkt an einer zweiten Position (x₂, y₂, z₂) befindet, in den Speicher 16 der Positionsbestimmungs-Einrichtung 9 für die spätere Berechnung der Position (x_{N}, y_{N}, z_{N}) des Standpunktes S und der Orientierung (O) der Totalstation T in dem Koordinatensystem (X, Y, Z) eingelesen. Darüber hinaus werden an der ersten Position (x₁, y₁, z₁) bzw. zu dem Zeitpunkt t₁ mit der Totalstation T die Richtung zu dem Reflektor 14 und die Entfernung a₁ zu dem Reflektor gemessen und an der zweiten Position (x₂, y₂, z₂) bzw. zu dem Zeitpunkt t₂ werden mit der Totalstation T die Richtung zu dem Reflektor 14 und die Entfernung a₂ zu dem Reflektor gemessen. Bei einer dreidimensionalen Raumkurve schließt die Richtungsmessung sowohl den Horizontalwinkel Hz als auch den Vertikalwinkel V ein. Bei einer Betrachtung nur in der Ebene reicht die Messung des Horizontalwinkels Hz aus. Diese Messwerte stellen Totalstationsdaten dar, die von dem Totalstationsdaten-Empfänger 15 empfangen werden. Die erste und zweite Position werden nachfolgend auch als erste und zweite Anschlusspunkte A₁ und A₂ bezeichnet. Die Totalstationsdaten für den ersten Anschlusspunkt A₁ und den zweiten Anschlusspunkt A₂ werden in dem Speicher 16 gespeichert. Die Koordinaten des ersten und zweiten Anschlusspunktes A₁ und A₂ in dem von der Baumaschine unabhängigen Koordinatensystem X, Y, Z sind bereits auf der Grundlage der GNSS-Messung ermittelt worden.

Für die Berechnung der Koordinaten des Standpunktes und der Orientierung der Totalstation T liest die Recheneinheit 11 die gespeicherten Satellitennavigationssystem-Positionsdaten und die Totalstationsdaten aus dem Speicher 16 aus. Die Recheneinheit 11 berechnet aus den bekannten Koordinaten der beiden Anschlusspunkte A₁ und A₂ und den Totalstationsdaten, d. h. dem an der Anschlussstelle A₁ gemessenen Horizontalwinkel H_{Z1}, Vertikalwinkel V₁ und der Entfernung a₁ und dem an der Anschlussstelle A₂ gemessenen Horizontalwinkel H_{Z2} Vertikalwinkel V₂ und der Entfernung a₂ sowie den bekannten Koordinaten (x₁, y₁, z₁) der ersten Anschlussstelle A₁ und den bekannten Koordinaten (x₂, y₂ z₂) der zweiten Anschlussstelle A₂, die Koordinaten (x_{N}, y_{N}, z_{N}) des Standpunktes S und die Orientierungsrichtung der Totalstation T in dem von der Baumaschine unabhängigen Koordinatensystem (X, Y, Z) des GNS-Systems.

Die Recheneinheit 11 ist derart konfiguriert, dass die Berechnung der Koordinaten (x_{N}, y_{N}, z_{N}) des Standpunktes S der Totalstation T mit den unter der Bezeichnung der freien Standpunktwahl oder freien Stationierung bekannten trigonometrischen Methoden berechnet. Die Positionsbestimmung kann insbesondere mit der als Rückwärtsschnitt bekannten Methode erfolgen. Die Koordinaten des Standpunktes und die Orientierung der Totalstation werden ebenfalls in dem Speicher 16 gespeichert.

Während der Bewegung der Baumaschine entlang der Soll-Wegstrecke W kann die Berechnung des Standpunktes S und der Orientierung der Totalstation an weiteren aufeinanderfolgenden Positionen (x₃, y₃; z₃;...; xₙ, yₙ, zₙ) oder zu weiteren unterschiedlichen Zeitpunkten (t₃, ..., tₙ) erfolgen, um Standpunkt und Orientierung jeweils erneut zu berechnen. Die zuvor berechnete Position des Standpunktes und die Orientierung können dann durch die neu berechneten Werte ersetzt werden.

Mit der Totalstation T brauchen keine Abstandsmessungen sondern nur Winkelmessungen vorgenommen zu werden, wenn ein geeigneter Algorithmus zur Positionsbestimmung implementiert ist. Beispielsweise kann mit dem Rückwärtsschnitt die Bestimmung der Koordinaten des Standpunktes durch die Messung des von dem Standpunkt gesehenen Horizontalwinkels zu drei Anschlusspunkten mit bekannten Koordinaten erfolgen. Zur Bestimmung der Position des Standpunktes und der Orientierung der Totalstation T wird mit der Totalstation zumindest der Horizontalwinkel in mindestens drei Messungen zu drei verschiedenen Zeitpunkten t₁, t₂, t₃ an drei verschiedenen Positionen (x₁, x₁, z₁; x₂, y₂, z₂; x₃, y₃, z₃) des Referenzpunktes R auf der Baumaschine, d. h. Anschlusspunkten A₁, A₂, A₃, gemessen und die zu den drei Anschlusspunkten ermittelten Totalstationsdaten werden in dem Speicher 16 gespeichert. Die Positionen (x₁, x₁, z₁; x₂, y₂, z₂; x₃, y₃, z₃) des Referenzpunktes R werden mit dem GNSS ermittelt. Die Bestimmung der Position des Standpunktes S und der Orientierung O der Totalstation T erfolgt dann nach der Methode des (ebenen) Rückwärtsschnitts.

Die Positionsbestimmungs-Einrichtung 9 kann dauernd die statistische Qualität der Positionsberechnung aufgrund der gegebenen Satellitenkonstellation überprüfen. Wenn die statistische Qualität der Satellitensignale nicht gegeben ist, kann der Steuerung ein anderer Steuerungsmodus zugrunde gelegtwerden, der nachfolgend beschrieben wird.

Es wird angenommen, dass sich die Baumaschine zum Zeitpunkt t₄ in einem Bereich befindet, in dem die statistische Qualität der Satellitensignale nicht mehr gegeben ist. Dieser Bereich ist in Fig. 4 durch eine Schraffur gekennzeichnet. Die momentane Position der Baumaschine 1 in dem von der Baumaschine unabhängigen Koordinatensystem (X, Y, Z) des GNSS wird nunmehr nicht mehr unter Verwendung des GNSS, sondern auf der Grundlage der zuvor ermittelten Position des Standpunktes S und der Orientierung O der Totalstation T und der momentanen Position der Baumaschine in Bezug auf den bekannten Standpunkt S und die bekannte Orientierung O der Totalstation T bestimmt. Diese Positionsbestimmung erfolgt durch Messung der Entfernung a₄ zwischen dem Standpunkt S der Totalstation T und dem Reflektor 14 (Referenzpunkt R) auf der Baumaschine sowie des Horizontalwinkels Hz und gegebenenfalls des Vertikalwinkels V mit der Totalstation T in bekannter Weise. Die Kenntnis der zuvor ermittelten Position des Standpunktes S und der Orientierung O der Totalstation T erlaubt die Transformation der Daten von dem auf die Totalstation T bezogenen Koordinatensystem (X',Y',Z') in das von der Baumaschine unabhängige Koordinatensystem (X, Y, Z)des GNNS.

Die für die Positionsbestimmung der Baumaschine erforderlichen Rechenoperationen können in der Recheneinheit 11 der Baumaschine oder einer Recheneinheit der Totalstation oder in beiden Recheneinheiten durchgeführt werden.

Bei einem Ausführungsbeispiel wird angenommen, dass die Rechenoperationen in der Recheneinheit 11 der Baumaschine durchgeführt werden. In diesem Fall werden Totalstationsdaten , die die Position der Baumaschine in dem auf die Totalstation T bezogenen Koordinatensystem (X', Y', Z') beinhalten, von der Totalstation T an die Baumaschine 1 gesendet und von dem Totalstationsdaten-Empfänger 15 empfangen. Aus diesen Totalstationsdaten und der zuvor ermittelten Position (xₙ, yₙ, zₙ) des Standpunktes S und der Orientierung O der Totalstation T in dem von der Baumaschine unabhängigen Koordinatensystem (X, Y, Z) berechnet die Recheneinheit 11 dann die Position des Referenzpunktes R auf der Baumaschine in dem von der Baumaschine unabhängigen Koordinatensystem (X, Y, Z) ohne die Verwendung des GNSS.

Die Ist-Position Pᵢₛₜ der Baumaschine 1 wird während der Bewegung der Baumaschine kontinuierlich oder in bestimmten Zeitabständen, die für eine genaue Steuerung ausreichend klein sein sollten, fortlaufend ermittelt. Die Steuereinrichtung 7 steuert die Antriebeinrichtung 8 dann derart an, dass die Abweichung d zwischen der Ist-Position Pᵢₛₜ und der durch die Daten der Soll-Wegstrecke W angegebenen Soll-Position Pₛₒₗₗ minimal ist. Sobald eine ausreichende Qualität der Sattelitensignale wieder gegeben ist, kann von dem Totalstation-Steuerungsmodus auf den Steuerungsmodus für den Normalbetrieb umgeschaltet werden, bei dem die Bestimmung der Ist-Position Pᵢₛₜ der Baumaschine mit dem GNSS erfolgt. Diese Umschaltung kann nach vorgegebenen Qualitätskriterien automatisch erfolgen.

Nachfolgend wird eine alternative Ausführungsform beschrieben, die voraussetzt, dass die Totalstation über eine eigene geeignete Recheneinheit verfügt, die eine "Einmessung" der Totalstation erlaubt. Fig. 3 zeigt eine derartige Totalstation T in schematischer Darstellung. Die Totalstation T weist eine Recheneinheit 17 sowie einen Sender 18 und einen Empfänger 18' auf. Bei der alternativen Ausführungsform weist die Baumaschine nicht nur einen Totalstationsdaten-Empfänger 15 sondern auch einen Sender 15' auf. Der Sender 15' der Baumaschine ist in Fig. 3 in gestrichelten Linien gezeichnet. Folglich ist eine bidirektionale Datenübertragung zwischen Baumaschine und Totalstation möglich. Die mit der Recheneinheit 11 der Baumaschine berechnete Position (x_{N}, y_{N}, z_{N}) des Standpunktes S und der Orientierung O der Totalstation T wird mit dem Sender 15' der Baumaschine an den Empfänger 18' der Totalstation T übertragen. Die Recheneinheit 17 der Totalstation T ist derart konfiguriert, dass die Totalstation auf der Grundlage der übertragenen Daten, die Position (x_{N}, y_{N}, z_{N}) des Standpunktes S und die Orientierung O der Totalstation T beinhalten, und der Messung der Richtung und Entfernung des Reflektors 14 Totalstationsdaten berechnet, die die Position des Reflektors in dem von der Baumaschine unabhängigen Koordinatensystem (X, Y ,Z) beschreiben. Wenn in dem Totalstation-Steuerungsmodus mit der "eingemessenen" Totalstation T die Position der Baumaschine bestimmt wird, sendet der Sender 18 der Totalstation T Totalstationsdaten, die die Position des Referenzpunktes R auf der Baumaschine nicht in dem auf die Totalstation T bezogenen Koordinatensystem (X',Y',Z') sondern in dem von der Baumaschine unabhängigen Koordinatensystem (X, Y, Z) beschreiben. Diese Daten werden von dem Totalstationsdaten-Empfänger 15 der Baumaschine empfangen. Die Steuereinrichtung 7 steuert dann die Antriebseinrichtung 8 derart an, dass sich der Referenzpunkt R auf der Soll-Wegstrecke W bewegt.

## Patentansprüche

1. Selbstfahrende Baumaschine mit
einem Maschinenrahmen (2),
einer am Maschinenrahmen (2) angeordneten Arbeitseinrichtung,
einer Antriebseinrichtung (8) zum Antreiben der Baumaschine (1), so dass sich die Baumaschine im Gelände bewegt,
einer Positionsbestimmungs-Einrichtung (9) zur Bestimmung der Position eines Referenzpunktes (R) auf der Baumaschine (1) in einem von der Baumaschine unabhängigen Koordinatensystem (X, Y, Z),
wobei die Positionsbestimmungs-Einrichtung (9) einen Navigationssatellitensystem-Empfänger (10) zum Empfangen von Satellitensignalen eines globalen Navigationssatellitensystems und eine Recheneinheit (11) aufweist, die derart konfiguriert ist, dass auf der Grundlage der Satellitensignale die Position eines Referenzpunktes (R) auf der Baumaschine beschreibende Navigationssatellitensystem-Positionsdaten in einem von der Baumaschine unabhängigen Koordinatensystem (X, Y, Z) bestimmt werden, und
einer Steuereinrichtung (7) zur Ansteuerung der Antriebseinrichtung (8), wobei die Steuereinrichtung (7) derart konfiguriert ist, dass sich der Referenzpunkt (R) auf der Baumaschine (1) entlang einer vorgegebenen Soll-Wegstrecke (W) bewegt,
wobei
die Positionsbestimmungs-Einrichtung (9) einen Reflektor (14) zur optischen Messung mittels einer Totalstation (T) und einen Totalstationsdaten-Empfänger (15) zum Empfangen von Totalstationsdaten der Totalstation (T) und einen Speicher (16) zum Speichern der Navigationssatellitensystem-Positionsdaten und Totalstationsdaten aufweist, und wobei
die Recheneinheit (11) der Positionsbestimmungs-Einrichtung (9) derart konfiguriert ist, dass für einen Totalstation-Steuerungsmodus, in dem die Steuerung der Baumaschine nicht auf der Grundlage der Satellitensignale des globalen Navigationssatellitensystems erfolgen soll, die Position des Standpunktes (S) und die Orientierung (O) der Totalstation (T) in dem von der Baumaschine unabhängigen Koordinatensystem (X, Y, Z) aus den an unterschiedlichen Positionen der Baumaschine bestimmten Navigationssatellitensystem-Positionsdaten und aus Richtung und/oder Entfernung des Reflektors (14) an den unterschiedlichen Positionen der Baumaschine beschreibenden Totalstationsdaten, die mit dem Totalstationsdaten-Empfänger (15) empfangen werden, berechnet werden, so dass in dem Totalstation-Steuerungsmodus die Positionen (xₙ, yₙ, zₙ) des Referenzpunktes (R) auf der Baumaschine in dem von der Baumaschine unabhängigen Koordinatensystem (X, Y, Z) aus der Position des Standpunktes (S) und der Orientierung (O) der Totalstation (T) und der in dem Totalstation-Steuerungsmodus mit der Totalstation gemessenen Richtung und Entfernung des Reflektors (14) bestimmt werden können, und wobei
die Steuereinrichtung (7) die Antriebeinrichtung (8) in dem Totalstation-Steuerungsmodus auf der Grundlage der im Totalstation-Steuerungsmodus bestimmten Positionen (xₙ, yₙ, zₙ) des Referenzpunktes (R) auf der Baumaschine derart ansteuert, dass sich der Referenzpunkt (R) auf der Baumaschine (1) entlang einer vorgegebenen Soll-Wegstrecke (W) bewegt,
**dadurch gekennzeichnet, dass**
die Recheneinheit (11) der Positionsbestimmungs-Einrichtung (9) derart konfiguriert ist, dass die Totalstationsdaten für die Bestimmung der Position des Standpunktes (S) und der Orientierung (O) der Totalstation (T) in dem von der Baumaschine unabhängigen Koordinatensystem (X, Y, Z) während der Bewegung der Baumaschine (1) in aufeinanderfolgenden Messungen zu unterschiedlichen Zeitpunkten (t1, t2, ..., tn) in die Speichereinheit (16) eingelesen werden, wobei die Position des Standpunktes (S) und die Orientierung (O) der Totalstation (T) fortlaufend berechnet werden.

2. Selbstfahrende Baumaschine nach Anspruch 1, **dadurch gekennzeichnet, dass** die Recheneinheit (11) der Positionsbestimmungs-Einrichtung (9) derart konfiguriert ist, dass in dem Totalstation-Steuerungsmodus die Positionen (xₙ, yₙ, zn) des Referenzpunktes (R) auf der Baumaschine in dem von der Baumaschine unabhängigen Koordinatensystem (X, Y, Z) aus der Position des Standpunktes (S) und der Orientierung (O) der Totalstation (T) und der in dem Totalstation-Steuerungsmodus mit der Totalstation gemessenen Richtung und Entfernung des Reflektors (14) bestimmt werden.

3. Selbstfahrende Baumaschine nach Anspruch 1 oder 2, **dadurch gekennzeichnet, dass** die Recheneinheit (11) der Positionsbestimmungs-Einrichtung (9) derart konfiguriert ist, dass die Position des Standpunktes (S) und die Orientierung der Totalstation (T) auf der Grundlage der Navigationssatellitensystem-Positionsdaten, die die Position des Referenzpunktes (R) auf der Baumaschine an einer ersten Position (x₁, y₁, z₁), die die Baumaschine in dem von der Baumaschine unabhängigen Koordinatensystem (X, Y, Z) einnimmt, beschreiben, und auf der Grundlage der Navigationssatellitensystem-Positionsdaten, die die Position des Referenzpunktes (R) auf der Baumaschine an einer zweiten Position (x₂, y₂, z₂), die die Baumaschine in dem von der Baumaschine unabhängigen Satellitennavigations-Koordinatensystem (X, Y, Z) einnimmt, beschreiben, und der Richtung und Entfernung des Reflektors (14) an der ersten und zweiten Position (x₁, y₁, z₁; x₂, y₂, z₂) beschreibenden Totalstationsdaten berechnet werden.

4. Selbstfahrende Baumaschine nach einem der Ansprüche 1 bis 3, **dadurch gekennzeichnet, dass** die Recheneinheit (11) der Positionsbestimmungs-Einrichtung (9) derart konfiguriert ist, dass die Position des Standpunktes (S) und die Orientierung der Totalstation (T) auf der Grundlage
der mit der Totalstation gemessenen Richtung (H_{z1}) zu dem Reflektor (14) auf der Baumaschine (1) und der Entfernung (a₁) zwischen dem Standpunkt (S) der Totalstation (T) und dem Reflektor (14) in der ersten Position (x₁, y₁, z₁), die die Baumaschine in dem von der Baumaschine unabhängigen Satellitennavigations-Koordinatensystem (X, Y, Z) einnimmt, und
der mit der Totalstation gemessenen Richtung (H_{z2}) zu dem Reflektor (14) auf der Baumaschine und der Entfernung (a₂) zwischen dem Standpunkt (S) der Totalstation (T) und dem Reflektor (14) in einer zweiten Position (x₂, y₂, z₂), die die Baumaschine in dem von der Baumaschine unabhängigen Satellitennavigations-Koordinatensystem (X, Y, Z) einnimmt, und
den Navigationssatellitensystem-Positionsdaten an der ersten und zweiten Position (x₁, y₁, z₁; x₂, y₂, z₂) berechnet werden.

5. Selbstfahrende Baumaschine nach Anspruch 1 oder 2, **dadurch gekennzeichnet, dass** die Recheneinheit (11) der Positionsbestimmungs-Einrichtung (9) derart konfiguriert ist, dass die Position des Standpunktes (S) und die Orientierung der Totalstation (T) auf der Grundlage
der mit der Totalstation (T) gemessenen Richtung (H_{z1}) zu dem Reflektor (14) auf der Baumaschine in einer ersten Position (x₁, y₁, z₁), die die Baumaschine in dem von der Baumaschine unabhängigen Satellitennavigations-Koordinatensystem (X, Y, Z) einnimmt,
der mit der Totalstation (T) gemessenen Richtung (H_{z2}) zu dem Reflektor (14) auf der Baumaschine in einer zweiten Position (x₂, y₂, z₂), die die Baumaschine in dem von der Baumaschine unabhängigen Satellitennavigations-Koordinatensystem (X, Y, Z) einnimmt, und
der mit der Totalstation (T) gemessenen Richtung (H_{z3}) zu dem Reflektor (14) auf der Baumaschine in einer dritten Position (x₃, y₃, z₃), die die Baumaschine in dem von der Baumaschine unabhängigen Satellitennavigations-Koordinatensystem (X, Y, Z) einnimmt, und
den Navigationssatellitensystem-Positionsdaten an der ersten, zweiten und dritten Position (x₁, y₁, z₁; x₂, y₂, z₂; x₃, y₃, z₃) berechnet werden.

6. Selbstfahrende Baumaschine nach einem der Ansprüche 1 bis 5, **dadurch gekennzeichnet, dass** die Steuereinrichtung (7) derart konfiguriert ist, dass die Antriebseinrichtung (8) derart gesteuert wird, dass der Abstand (d) zwischen der von der Soll-Wegstrecke (W) beschriebenen Soll-Position (Pₛₒₗₗ) und der Ist-Position (Pᵢₛₜ) des Referenzpunktes (R) minimal ist.

7. Selbstfahrende Baumaschine nach einem der Ansprüche 1 bis 6, **dadurch gekennzeichnet, dass** die Baumaschine (1) eine Straßenfräse oder ein Recycler oder Stabilisierer oder Surface Miner ist, wobei die Arbeitseinrichtung eine mit Fräs- oder Schneidwerkzeugen bestückte Fräs-/Schneidwalze (6A) aufweist, oder dass die Baumaschine (1) ein Gleitschalungsfertiger ist, wobei die Arbeitseinrichtung eine Vorrichtung (6) zum Formen von fließfähigem Material aufweist, oder dass die Baumaschine (1) ein Straßenfertiger ist, wobei die Arbeitseinrichtung eine Einbaubohle zum Formen von Material aufweist.

8. Baumaschinen-System mit einer selbstfahrenden Baumaschine (1) nach einem der Ansprüche 1 bis 7 und einer Totalstation (T).

9. Verfahren zum Steuern einer selbstfahrenden Baumaschine, die einen Maschinenrahmen (2), eine am Maschinenrahmen angeordnete Arbeitseinrichtung und eine Antriebseinrichtung (8) zum Antreiben der Baumaschine, so dass sich die Baumaschine in dem Gelände bewegt, aufweist, wobei das Verfahren die folgenden Verfahrensschritte aufweist:
Empfangen von Satellitensignalen von einem Navigationssatellitensystem,
Bestimmen von Navigationssatellitensystem-Positionsdaten, die eine Position eines Referenzpunktes (R) auf der Baumaschine in einem von der Baumaschine unabhängigen Koordinatensystem (X, Y, Z) beschreiben, auf der Grundlage der Satellitensignale des Navigationssatellitensystems,
Ansteuern der Antriebseinrichtung (8) der Baumaschine derart, dass sich der Referenzpunkt (R) auf der Baumaschine entlang einer vorgegebenen Soll-Wegstrecke (W) bewegt,
wobei
an einem Standpunkt (S) im Umkreis der Baumaschine eine Totalstation (T) aufgestellt wird und von der Totalstation (T) Totalstationsdaten empfangen werden,
und wobei
für einen Totalstation-Steuerungsmodus, in dem die Steuerung der Baumaschine nicht auf der Grundlage der Satellitensignale des globalen
Navigationssatellitensystems erfolgen soll, die Position des Standpunktes (S) und die Orientierung (O) der Totalstation (T) in dem von der Baumaschine unabhängigen Koordinatensystem (X, Y, Z) beim Bewegen der Baumaschine aus den an unterschiedlichen Positionen der Baumaschine ermittelten
Navigationssatellitensystem-Positionsdaten und Totalstationsdaten, die Richtung und/oder Entfernung eines auf der Baumaschine angeordneten Reflektors (14) beschreiben, berechnet wird, und in dem Totalstation-Steuerungsmodus die Positionen (xₙ, yₙ, zₙ) des Referenzpunktes (R) auf der Baumaschine in dem von der Baumaschine unabhängigen Koordinatensystem (X, Y, Z) aus der Position des Standpunktes (S) und der Orientierung (O) der Totalstation (T) und der in dem Totalstation-Steuerungsmodus mit der Totalstation gemessenen Richtung und
Entfernung des Reflektors (14) bestimmt werden, und wobei
in dem Totalstation-Steuerungsmodus die Antriebeinrichtung (8) auf der Grundlage der in dem Totalstation-Steuerungsmodus bestimmten Positionen (xₙ, yₙ, zₙ) des Referenzpunktes (R) derart angesteuert wird, dass sich der Referenzpunkt (R) auf der Baumaschine (1) entlang einer vorgegebenen Soll-Wegstrecke (W) bewegt
**dadurch gekennzeichnet, dass**
die Totalstationsdaten für die Bestimmung der Position des Standpunktes (S) und der Orientierung (O) der Totalstation (T) in dem von der Baumaschine unabhängigen Koordinatensystem (X, Y, Z) während der Bewegung der Baumaschine (1) in aufeinanderfolgenden Messungen zu unterschiedlichen Zeitpunkten (t₁, t₂, ..., tₙ) gespeichert werden, wobei die Position des Standpunktes (S) und die Orientierung (O) der Totalstation (T) fortlaufend berechnet werden.

10. Verfahren nach Anspruch 9, **dadurch gekennzeichnet, dass** die Position des Standpunktes (S) und Orientierung (O) der Totalstation (T) auf der Grundlage der Navigationssatellitensystem-Positionsdaten, die die Position eines Referenzpunktes (R) auf der Baumaschine an einer ersten Position (x₁, y₁, z₁), die die Baumaschine in dem von der Baumaschine unabhängigen Koordinatensystem (X, Y, Z) einnimmt, beschreiben, und auf der Grundlage der Navigationssatellitensystem-Positionsdaten, die die Position eines Referenzpunktes (R) auf der Baumaschine an einer zweiten Position (x₂, y₂, z₂), die die Baumaschine in dem von der Baumaschine unabhängigen Satellitennavigations-Koordinatensystem (X, Y, Z) einnimmt, beschreiben, und den Totalstationsdaten an der ersten und zweiten Position (x₁, y₁, z₁; x₂, y₂, z₂) berechnet werden.

11. Verfahren nach Anspruch 9 oder 10, **dadurch gekennzeichnet, dass** die Position des Standpunktes (S) und die Orientierung (O) der Totalstation (T) auf der Grundlage
der mit der Totalstation gemessenen Richtung (H_{z1}) zu dem Reflektor (14) auf der Baumaschine (1) und der Entfernung (a₁) zwischen dem Standpunkt (S) der Totalstation (T) und dem Reflektor (14) in der ersten Position (x₁, y₁, z₁), die die Baumaschine in dem von der Baumaschine unabhängigen Satellitennavigations-Koordinatensystem (X, Y, Z) einnimmt, und
der mit der Totalstation gemessenen Richtung (H_{z2}) zu dem Reflektor (14) auf der Baumaschine und der Entfernung (a₂) zwischen dem Standpunkt (S) der Totalstation (T) und dem Reflektor (14) in einer zweiten Position (x₂, y₂, z₂), die die Baumaschine in dem von der Baumaschine unabhängigen Satellitennavigations-Koordinatensystem (X, Y, Z) einnimmt, und
den Navigationssatellitensystem-Positionsdaten an der ersten und zweiten Position (X₁, y₁, z₁; x₂, y₂, z₂) berechnet wird.

12. Verfahren nach Anspruch 9, **dadurch gekennzeichnet, dass** die Position des Standpunktes (S) und die Orientierung (O) der Totalstation (T) auf der Grundlage
der mit der Totalstation (T) gemessenen Richtung (H_{z1}) zu dem Reflektor (14) auf der Baumaschine in einer ersten Position (x₁, y₁, z₁), die die Baumaschine in dem von der Baumaschine unabhängigen Satellitennavigations-Koordinatensystem (X, Y, Z) einnimmt,
den mit der Totalstation (T) gemessenen Richtung (H_{z2}) zu dem Reflektor (14) auf der Baumaschine in einer zweiten Position (x₂, y₂, z₂), die die Baumaschine in dem von der Baumaschine unabhängigen Satellitennavigations-Koordinatensystem (X, Y, Z) einnimmt, und
den mit der Totalstation (T) gemessenen Richtung (H_{z3}) zu dem Reflektor (14) auf der Baumaschine in einer dritten Position (x₃, y₃, z₃), die die Baumaschine in dem von der Baumaschine unabhängigen Satellitennavigations-Koordinatensystem (X, Y, Z) einnimmt, und
den Navigationssatellitensystem-Positionsdaten an der ersten, zweiten und dritten Position (x₁, y₁, z₁; x₂, y₂, z₂; x₃, y₃, z₃) berechnet werden.

13. Verfahren nach einem der Ansprüche 9 bis 12, **dadurch gekennzeichnet, dass** die Antriebseinrichtung (8) derart angesteuert wird, dass der Abstand (d) zwischen der von der Soll-Wegstrecke (W) beschriebenen Soll-Position (Pₛₒₗₗ) und der Ist-Position (Pᵢₛₜ) des Referenzpunktes (R) auf der Baumaschine minimal ist.

## Claims

1. Self-propelled construction machine comprising
a machine frame (2),
a working means arranged on the machine frame (2),
a drive means (8) for driving the construction machine (1) such that the construction machine moves in the terrain,
a position-determination means (9) for determining the position of a reference point (R) on the construction machine (1) in a coordinate system (X, Y, Z) that is independent of the construction machine,
the position-determination means (9) comprising a navigation satellite system receiver (10) for receiving satellite signals from a global navigation satellite system, and a processor (11) which is configured such that navigation satellite system position data describing the position of a reference point (R) on the construction machine are determined in a coordinate system (X, Y, Z) that is independent of the construction machine on the basis of the satellite signals, and
a control means (7) for actuating the drive means (8), the control means (7) being configured such that the reference point (R) on the construction machine (1) moves along a set target travel path (W),
the position-determination means (9) comprising a reflector (14) for optical measurement by means of a total station (T), and a total station data receiver (15) for receiving total station data from the total station (T) and a memory (16) for storing the navigation satellite system position data and total station data, and
the processor (11) of the position-determination means (9) being configured such that, for a total station control mode in which the construction machine is not intended to be controlled on the basis of the satellite signals from the global navigation satellite system, the position of the standpoint (S) and the orientation (O) of the total station (T) in the coordinate system (X, Y, Z) that is independent of the construction machine are calculated from the navigation satellite system position data determined at different positions of the construction machine, and from total station data which describe the direction and/or distance of the reflector (14) at the different positions of the construction machine and are received by the total station data receiver (15), such that, in the total station control mode, the positions (xₙ, yₙ, zₙ) of the reference point (R) on the construction machine in the coordinate system (X, Y, Z) that is independent of the construction machine can be determined from the position of the standpoint (S) and the orientation (O) of the total station (T) and the direction and distance of the reflector (14) measured by the total station in the total station control mode, and
the control means (7) actuating the drive means (8) in the total station control mode, on the basis of the positions (xₙ, yₙ, zₙ) of the reference point (R) on the construction machine determined in the total station control mode, such that the reference point (R) on the construction machine (1) moves along a set target travel (W)
**characterised in that**
the processor (11) of the position-determination means (9) is configured such that the total station data for determining the position of the standpoint (S) and the orientation (O) of the total station (T) in the coordinate system (X, Y, Z) that is independent of the construction machine are input into the memory unit (16), during the movement of the construction machine (1), in successive measurements at different points in time (t₁, t₂, ..., tₙ), the position of the standpoint (S) and the orientation (O) of the total station (T) being calculated in an ongoing manner.

2. Self-propelled construction machine according to claim 1, **characterised in that** the processor (11) of the position-determination means (9) is configured such that, in the total station control mode, the positions (xₙ, yₙ, zₙ) of the reference point (R) on the construction machine in the coordinate system (X, Y, Z) that is independent of the construction machine are determined from the position of the standpoint (S) and the orientation (O) of the total station (T) and the direction and distance of the reflector (14) measured by the total station in the total station control mode.

3. Self-propelled construction machine according to either claim 1 or claim 2, **characterised in that** the processor (11) of the position-determination means (9) is configured such that the position of the standpoint (S) and the orientation of the total station (T) are calculated on the basis of the navigation satellite system position data which describe the position of the reference point (R) on the construction machine at a first position (x₁, y₁, z₁) adopted by the construction machine in the coordinate system (X, Y, Z) that is independent of the construction machine, and on the basis of the navigation satellite system position data which describe the position of the reference point (R) on the construction machine at a second position (x₂, y₂, z₂) adopted by the construction machine in the satellite navigation coordinate system (X, Y, Z) that is independent of the construction machine, and the total station data describing the direction and distance of the reflector (14) at the first and the second position (X₁, y₁, z₁; x₂, y₂, z₂).

4. Self-propelled construction machine according to any of claims 1 to 3, **characterised in that** the processor (11) of the position-determination means (9) is configured such that the position of the standpoint (S) and the orientation of the total station (T) are calculated on the basis of,
measured by the total station, the direction (H_{z1}) towards the reflector (14) on the construction machine (1) and the distance (a₁) between the standpoint (S) of the total station (T) and the reflector (14) in the first position (x₁, y₁, z₁) adopted by the construction machine in the satellite navigation coordinate system (X, Y, Z) that is independent of the construction machine, and,
measured by the total station, the direction (H_{z2}) towards the reflector (14) on the construction machine and the distance (a₂) between the standpoint (S) of the total station (T) and the reflector (14) in a second position (x₂, y₂, z₂) adopted by the construction machine in the satellite navigation coordinate system (X, Y, Z) that is independent of the construction machine, and
the navigation satellite system position data at the first and the second position (x₁, y₁, z₁; x₂, y₂, z₂).

5. Self-propelled construction machine according to either claim 1 or claim 2, **characterised in that** the processor (11) of the position-determination means (9) is configured such that the position of the standpoint (S) and the orientation of the total station (T) are calculated on the basis of,
measured by the total station (T), the direction (H_{z1}) towards the reflector (14) on the construction machine in a first position (x₁, y₁, z₁) adopted by the construction machine in the satellite navigation coordinate system (X, Y, Z) that is independent of the construction machine,
measured by the total station, the direction (H_{z2}) towards the reflector (14) on the construction machine in a second position (x₂, y₂, z₂) adopted by the construction machine in the satellite navigation coordinate system (X, Y, Z) that is independent of the construction machine, and
measured by the total station (T), the direction (H_{z3}) towards the reflector (14) on the construction machine in a third position (x₃, y₃, z₃) adopted by the construction machine in the satellite navigation coordinate system (X, Y, Z) that is independent of the construction machine, and
the navigation satellite system position data at the first, the second and the third position (X₁, y₁, z₁; X2, y₂, z₂; x₃, y₃, z₃).

6. Self-propelled construction machine according to any of claims 1 to 5, **characterised in that** the control means (7) is configured such that the drive means (8) is controlled in such a way that the distance (d) between the target position (Pₛₒₗₗ) described by the target travel path (W) and the actual position (Pist) of the reference point (R) is minimal.

7. Self-propelled construction machine according to any of claims 1 to 6, **characterised in that** the construction machine (1) is a road miller or a recycler or stabiliser or surface miner, with the working means having a milling/cutting roller (6A) fitted with milling or cutting tools, or **in that** the construction machine (1) is a slipform paver, with the working means having a device (6) for moulding flowable material, or **in that** the construction machine (1) is a road finisher, with the working means having a screed for shaping material.

8. Construction machine system comprising a self-propelled construction machine (1) according to any of claims 1 to 7 and a total station (T).

9. Method for controlling a self-propelled construction machine which has a machine frame (2), a working means arranged on the machine frame and a drive means (8) for driving the construction machine such that the construction machine moves in the terrain, the method comprising the following method steps:
receiving satellite signals from a navigation satellite system,
determining navigation satellite system position data which describe a position of a reference point (R) on the construction machine in a coordinate system (X, Y, Z) that is independent of the construction machine on the basis of the satellite signals from the navigation satellite system,
actuating the drive means (8) on the construction machine such that a reference point (R) on the construction machine moves along a set target travel path (W),
a total station (T) being positioned at a standpoint (S) in the vicinity of the construction machine and total station data are received by the total station (T), and
for a total station control mode in which the construction machine is not intended to be controlled on the basis of the satellite signals from the global navigation satellite system, the position of the standpoint (S) and the orientation (O) of the total station (T) in the coordinate system (X, Y, Z) that is independent of the construction machine being calculated, when the construction machines moves, from the navigation satellite system position data ascertained at different positions of the construction machine, and from total station data which describe the direction and/or distance of the reflector (14) arranged on the construction machine, and, in the total station control mode, the positions (xₙ, yₙ, zₙ) of the reference point (R) on the construction machine in the coordinate system (X, Y, Z) that is independent of the construction machine are determined from the position of the standpoint (S) and the orientation (O) of the total station (T) and the direction and distance of the reflector (14) measured by the total station (T) in the total station control mode, and
in the total station control mode, the drive means (8) being actuated on the basis of the positions (xₙ, yₙ, zₙ) of the reference point (R) determined in the total station control mode such that the reference point (R) on the construction machine (1) moves along a set target travel (W),
**characterised in that**
the total station data for determining the position of the standpoint (S) and the orientation (O) of the total station (T) in the coordinate system (X, Y, Z) that is independent of the construction machine are stored, during the movement of the construction machine (1), in successive measurements at different points in time (t₁, t₂, ..., tₙ), the position of the standpoint (S) and the orientation (O) of the total station (T) being calculated in an ongoing manner.

10. Method according to claim 9, **characterised in that** the position of the standpoint (S) and orientation (O) of the total station (T) are calculated on the basis of the navigation satellite system position data which describe the position of a reference point (R) on the construction machine at a first position (x₁, y₁, z₁) adopted by the construction machine in the coordinate system (X, Y, Z) that is independent of the construction machine, and on the basis of the navigation satellite system position data which describe the position of a reference point (R) on the construction machine at a second position (x₂, y₂, z₂) adopted by the construction machine in the satellite navigation coordinate system (X, Y, Z) that is independent of the construction machine, and the total station data at the first and the second position (x₁, y₁, z₁; x₂, y₂, z₂).

11. Method according to either claim 9 or claim 10, **characterised in that** the position of the standpoint (S) and the orientation (O) of the total station (T) are calculated on the basis of,
measured by the total station, the direction (H_{z1}) towards the reflector (14) on the construction machine (1) and the distance (a₁) between the standpoint (S) of the total station (T) and the reflector (14) in the first position (x₁, y₁, z₁) adopted by the construction machine in the satellite navigation coordinate system (X, Y, Z) that is independent of the construction machine, and
measured by the total station, the direction (H_{z2}) towards the reflector (14) on the construction machine and the distance (a₂) between the standpoint (S) of the total station (T) and the reflector (14) in a second position (x₂, y₂, z₂) adopted by the construction machine in the satellite navigation coordinate system (X, Y, Z) that is independent of the construction machine, and
the navigation satellite system position data at the first and the second position (x₁, y₁, z₁; x₂, y₂, z₂).

12. Method according to claim 9, **characterised in that** the position of the standpoint (S) and the orientation (O) of the total station (T) are calculated on the basis of,
measured by the total station (T), the direction (H_{z1}) towards the reflector (14) on the construction machine in a first position (x₁, y₁, z₁) adopted by the construction machine in the satellite navigation coordinate system (X, Y, Z) that is independent of the construction machine,
measured by the total station (T), the direction (H_{z2}) towards the reflector (14) on the construction machine in a second position (x₂, y₂, z₂) adopted by the construction machine in the satellite navigation coordinate system (X, Y, Z) that is independent of the construction machine, and
measured by the total station (T), the direction (H_{z3}) towards the reflector (14) on the construction machine in a third position (x₃, y₃, z₃) adopted by the construction machine in the satellite navigation coordinate system (X, Y, Z) that is independent of the construction machine, and
the navigation satellite system position data at the first, the second and the third position (x₁, y₁, z₁; x₂, y₂, z₂; x₃, y₃, z₃).

13. Method according to any of claims 9 to 12, **characterised in that** the drive means (8) is actuated in such a way that the distance (d) between the target position (Pₛₒₗₗ) described by the target travel path (W) and the actual position (Pᵢₛₜ) of the reference point (R) on the construction machine is minimal.

## Revendications

1. Engin de construction automoteur avec
un bâti d'engin (2),
un dispositif de travail agencé au niveau du bâti d'engin (2),
un dispositif d'entraînement (8) pour l'entraînement de l'engin de construction (1) de sorte que l'engin de construction se déplace sur le terrain,
un dispositif de détermination de position (9) pour la détermination de la position d'un point de référence (R) sur l'engin de construction (1) dans un système de coordonnées (X, Y, Z) indépendant de l'engin de construction,
dans lequel le dispositif de détermination de position (9) présente un récepteur de système de navigation par satellite (10) pour la réception de signaux satellites d'un système de navigation par satellite global et une unité de calcul (11) qui est configurée de telle manière que sur la base des signaux satellites, des données de position de système de navigation par satellite décrivant la position d'un point de référence (R) sur l'engin de construction soient déterminées dans un système de coordonnées (X, Y, Z) indépendant de l'engin de construction, et
un dispositif de commande (7) pour la commande du dispositif d'entraînement (8), dans lequel le dispositif de commande (7) est configuré de telle manière que le point de référence (R) sur l'engin de construction (1) se déplace le long d'un parcours de consigne (W) prédéfini,
dans lequel
le dispositif de détermination de position (9) présente un réflecteur (14) pour la mesure optique au moyen d'une station totale (T) et un récepteur de données de station totale (15) pour la réception de données de station totale de la station totale (T) et une mémoire (16) pour l'enregistrement des données de position de système de navigation par satellite et de données de station totale, et dans lequel l'unité de calcul (11) du dispositif de détermination de position (9) est configurée de telle manière que pour un mode de commande de station totale, dans lequel la commande de l'engin de construction ne doit pas être effectuée sur la base des signaux satellites du système de navigation par satellite global, la position du site (S) et l'orientation (O) de la station totale (T) dans le système de coordonnées (X, Y, Z) indépendant de l'engin de construction soient calculées à partir des données de position de système de navigation par satellite déterminées au niveau des positions différentes de l'engin de construction et à partir des données de station totale décrivant la direction et/ou la distance du réflecteur (14) au niveau des positions différentes de l'engin de construction qui sont reçues avec le récepteur de données de station totale (15) de sorte que dans le mode de commande de station totale les positions (xₙ, yₙ, zₙ) du point de référence (R) sur l'engin de construction dans le système de coordonnées (X, Y, Z) indépendant de l'engin de construction puissent être déterminées à partir de la position du site (S) et de l'orientation (O) de la station totale (T) et la direction et la distance du réflecteur (14) mesurées dans le mode de commande de station totale avec la station totale, et dans lequel
le dispositif de commande (7) commande le dispositif d'entraînement (8) dans le mode de commande de station totale sur la base des positions (xₙ, yₙ, zₙ) déterminées dans le mode de commande de station totale du point de référence (R) sur l'engin de construction de telle manière que le point de référence (R) sur l'engin de construction (1) se déplace le long d'un parcours de consigne (W) prédéfini,
**caractérisé en ce que**
l'unité de calcul (11) du dispositif de détermination de position (9) est configurée de telle manière que les données de station totale pour la détermination de la position du site (S) et de l'orientation (O) de la station totale (T) sont lues dans le système de coordonnées (X, Y, Z) indépendant de l'engin de construction pendant le mouvement de l'engin de construction (1) dans des mesures successives à différents moments (t1, t2, ..., tn) dans l'unité d'enregistrement (16), dans lequel la position du site (S) et l'orientation (O) de la station totale (T) sont calculées en continu.

2. Engin de construction automoteur selon la revendication 1, **caractérisé en ce que** l'unité de calcul (11) du dispositif de détermination de position (9) est configurée de telle manière que dans le mode de commande de station totale les positions (xₙ, yₙ, zₙ) du point de référence (R) sur l'engin de construction dans le système de coordonnées (X, Y, Z) indépendant de l'engin de construction soient déterminées à partir de la position du site (S) et de l'orientation (O) de la station totale (T) et de la direction et la distance du réflecteur (14) mesurées dans le mode de commande de station totale avec la station totale.

3. Engin de construction automoteur selon la revendication 1 ou 2, **caractérisé en ce que** l'unité de calcul (11) du dispositif de détermination de position (9) est configurée de telle manière que la position du site (S) et l'orientation de la station totale (T) soient calculées sur la base des données de position de système de navigation par satellite qui décrivent la position du point de référence (R) sur l'engin de construction au niveau d'une première position (x₁, y₁, z₁) qu'occupe l'engin de construction dans le système de coordonnées (X, Y, Z) indépendant de l'engin de construction, et sur la base des données de position de système de navigation par satellite qui décrivent la position du point de référence (R) sur l'engin de construction au niveau d'une seconde position (x₂, y₂, z₂) qu'occupe l'engin de construction dans le système de coordonnées de navigation par satellite (X, Y, Z) indépendant de l'engin de construction, et des données de station totale décrivant la direction et la distance du réflecteur (14) au niveau de la première et deuxième position (x₁, y₁, z₁ ; x₂, y₂, z₂).

4. Engin de construction automoteur selon l'une des revendications 1 à 3,
**caractérisé en ce que** l'unité de calcul (11) du dispositif de détermination de position (9) est configurée de telle manière que la position du site (S) et l'orientation de la station totale (T) soient calculées sur la base de la direction (H_{z1}) mesurée avec la station totale par rapport au réflecteur (14) sur l'engin de construction (1) et la distance (a₁) entre le site (S) de la station totale (T) et le réflecteur (14) dans la première position (x₁, y₁, z₁) qu'occupe l'engin de construction dans le système de coordonnées de navigation par satellite (X, Y, Z) indépendant de l'engin de construction, et
la direction (H_{z2}) mesurée avec la station totale par rapport au réflecteur (14) sur l'engin de construction et la distance (a₂) entre le site (S) de la station totale (T) et le réflecteur (14) dans une seconde position (x₂, y₂, z₂) qu'occupe l'engin de construction dans le système de coordonnées de navigation par satellite (X, Y, Z) indépendant de l'engin de construction, et
des données de position de système de navigation par satellite au niveau de la première et deuxième position (x₁, y₁, z₁ ; x₂, y₂, z₂).

5. Engin de construction automoteur selon la revendication 1 ou 2, **caractérisé en ce que** l'unité de calcul (11) du dispositif de détermination de position (9) est configurée de telle manière que la position du site (S) et l'orientation de la station totale (T) soient calculées sur la base de
la direction (H_{z1}) mesurée avec la station totale (T) par rapport au réflecteur (14) sur l'engin de construction dans une première position (x₁, y₁, z₁) qu'occupe l'engin de construction dans le système de coordonnées de navigation par satellite (X, Y, Z) indépendant de l'engin de construction,
la direction (H_{z2}) mesurée avec la station totale (T) par rapport au réflecteur (14) sur l'engin de construction dans une deuxième position (x₂, y₂, z₂) qu'occupe l'engin de construction dans le système de coordonnées de navigation par satellite (X, Y, Z) indépendant de l'engin de construction, et
la direction (H_{z3}) mesurée avec la station totale (T) par rapport au réflecteur (14) sur l'engin de construction dans une troisième position (x₃, y₃, z₃) qu'occupe l'engin de construction dans le système de coordonnées de navigation par satellite (X, Y, Z) indépendant de l'engin de construction, et
des données de position de système de navigation par satellite au niveau de la première, deuxième et troisième positions (x₁, y₁, z₁ ; x₂, y₂ z₂; x₃, y₃, z₃).

6. Engin de construction automoteur selon l'une des revendications 1 à 5,
**caractérisé en ce que** le dispositif de commande (7) est configuré de telle manière que le dispositif d'entraînement (8) soit commandé de telle manière que la distance (d) entre la position de consigne (P_{consigne}) décrite par le parcours de consigne (W) et la position réelle (P_{réelle}) du point de référence (R) soit minimale,

7. Engin de construction automoteur selon l'une des revendications 1 à 6,
**caractérisé en ce que** l'engin de construction (1) est une fraiseuse de route ou une recycleuse ou stabilisatrice ou mineuse de surface, dans lequel le dispositif de travail présente un rouleau de fraisage/de coupe (6A) équipé d'outils de fraisage ou de coupe, ou que l'engin de construction (1) est une finisseuse à coffrages glissants, dans lequel le dispositif de travail présente un dispositif (6) pour le moulage de matériau coulant, ou que l'engin de construction (1) est une finisseuse de route, dans lequel le dispositif de travail présente une poutre incorporée pour le moulage de matériau,

8. Système d'engin de construction avec un engin de construction automoteur (1) selon l'une des revendications 1 à 7 et une station totale (T).

9. Procédé de commande d'un engin de construction automoteur qui présente un bâti d'engin (2), un dispositif de travail agencé au niveau du bâti d'engin et un dispositif d'entraînement (8) pour l'entraînement de l'engin de construction de sorte que l'engin de construction se déplace dans le terrain, dans lequel le procédé présente les étapes de procédé suivantes :
la réception de signaux satellites par un système de navigation par satellite,
la détermination de données de position de système de navigation par satellite qui décrivent une position d'un point de référence (R) sur l'engin de construction dans un système de coordonnées (X, Y, Z) indépendant de l'engin de construction, sur la base des signaux satellites du système de navigation par satellite,
la commande du dispositif d'entraînement (8) de l'engin de construction de telle manière que le point de référence (R) sur l'engin de construction se déplace le long d'un parcours de consigne (W) prédéfini,
dans lequel
au niveau d'un site (S) à la périphérie de l'engin de construction une station totale (T) est placée et des données de station totale sont reçues par la station totale (T), et dans lequel
pour un mode de commande de station totale dans lequel la commande de l'engin de construction ne doit pas être effectuée sur la base des signaux satellites du système de navigation par satellite global, la position du site (S) et l'orientation (O) de la station totale (T) sont calculées dans le système de coordonnées (X, Y, Z) indépendant de l'engin de construction lors du déplacement de l'engin de construction à partir des données de position de système de navigation par satellite et des données de station totale déterminées au niveau des différentes positions de l'engin de construction, décrivent la direction et/ou la distance d'un réflecteur (14) agencé sur l'engin de construction, et dans le mode de commande de station totale les positions (xₙ, yₙ, zₙ) du point de référence (R) sur l'engin de construction dans le système de coordonnées (X, Y, Z) indépendant de l'engin de construction sont déterminées à partir de la position du site (S) et l'orientation (O) de la station totale (T) et de la direction et distance du réflecteur (14) mesurées dans le mode de commande de station totale avec la station totale, et dans lequel dans le mode de commande de station totale le dispositif d'entraînement (8) est commandé sur la base des positions (xₙ, yₙ, zₙ) déterminées dans le mode de commande de station totale du point de référence (R) de telle manière que le point de référence (R) sur l'engin de construction (1) se déplace le long d'un parcours de consigne (W) prédéfini,
**caractérisé en ce que**
les données de station totale sont enregistrées pour la détermination de la position du site (S) et de l'orientation (O) de la station totale (T) dans le système de coordonnées (X, Y, Z) indépendant de l'engin de construction pendant le déplacement de l'engin de construction (1) dans des mesures successives à différents moments (t₁, t₂, ..., tₙ), dans lequel la position du site (S) et l'orientation (O) de la station totale (T) sont calculées en continu.

10. Procédé selon la revendication 9, **caractérisé en ce que** la position du site (S) et l'orientation (O) de la station totale (T) sont calculées sur la base des données de position de système de navigation par satellite qui décrivent la position d'un point de référence (R) sur l'engin de construction au niveau d'une première position (x₁, y₁, z₁) qu'occupe l'engin de construction dans le système de coordonnées (X, Y Z) indépendant de l'engin de construction, et sur la base des données de position de système de navigation par satellite qui décrivent la position d'un point de référence (R) sur l'engin de construction au niveau d'une deuxième position (x₂, y₂ z₂) qu'occupe l'engin de construction dans le système de coordonnées de navigation par satellite (X, Y, Z) indépendant de l'engin de construction, et des données de station totale au niveau de la première et deuxième positions (x₁, y₁, z₁ ; x₂, y₂ z₂).

11. Procédé selon la revendication 9 ou 10, **caractérisé en ce que** la position du site (S) et l'orientation (O) de la station totale (T) sont calculées sur la base de la direction (H_{z1}) mesurée avec la station totale par rapport au réflecteur (14) sur l'engin de construction (1) et la distance (a₁) entre le site (S) de la station totale (T) et le réflecteur (14) dans la première position (x₁, y₁, z₁) qu'occupe l'engin de construction dans le système de coordonnées de navigation par satellite (X, Y, Z) indépendant de l'engin de construction, et
la direction (H_{z2}) mesurée avec la station totale par rapport au réflecteur (14) sur l'engin de construction et la distance (a₂) entre le site (S) de la station totale (T) et le réflecteur (14) dans une deuxième position (x₂, y₂ z₂) qu'occupe l'engin de construction dans le système de coordonnées de navigation par satellite (X, Y, Z) indépendant de l'engin de construction, et
des données de position de système de navigation par satellite au niveau de la première et deuxième position (x₁, y₁, z₁ ; x₂, y₂, z₂).

12. Procédé selon la revendication 9, **caractérisé en ce que** la position du site (S) et l'orientation (O) de la station totale (T) sont calculées sur la base de la direction (H_{z1}) mesurée avec la station totale (T) par rapport au réflecteur (14) sur l'engin de construction dans une première position (x₁, y₁, z₁) qu'occupe l'engin de construction dans le système de coordonnées de navigation par satellite (X, Y, Z) indépendant de l'engin de construction,
la direction (H_{z2}) mesurée avec la station totale (T) par rapport au réflecteur (14) sur l'engin de construction dans une deuxième position (x₂, y₂, z₂) qu'occupe l'engin de construction dans le système de coordonnées de navigation par satellite (X, Y, Z) indépendant de l'engin de construction, et
la direction (H_{z3}) mesurée avec la station totale (T) par rapport au réflecteur (14) sur l'engin de construction dans une troisième position (x₃, y₃, z₃) qu'occupe l'engin de construction dans le système de coordonnées de navigation par satellite (X, Y, Z) indépendant de l'engin de construction, et
des données de position de système de navigation par satellite au niveau de la première, deuxième et troisième position (x₁, y₁, z₁ ; x₂, y₂, z₂; x₃, y₃, z₃).

13. Procédé selon l'une des revendications 9 à 12, **caractérisé en ce que** le dispositif d'entraînement (8) est commandé de telle manière que la distance (d) entre la position de consigne (P_{consigne}) décrite par le parcours de consigne (W) et la position réelle (P_{réelle}) du point de référence (R) sur l'engin de construction soit minimale.
